(19) Europäisches Patentamt

European Patent Office

Office européen des brevets

(11) **EP 4 304 082 B1**

(12) **EUROPEAN PATENT SPECIFICATION**

(45) Date of publication and mention
of the grant of the patent:
**05.11.2025 Bulletin 2025/45**

(21) Application number: **22183431.0**

(22) Date of filing: **06.07.2022**

(51) International Patent Classification (IPC):
*H02P 29/028* (2016.01)   *H02M 7/487* (2007.01)
*H02P 21/04* (2006.01)   *H02P 21/00* (2016.01)
*H02P 1/46* (2006.01)   *H02M 1/14* (2006.01)
*H02M 1/32* (2007.01)   *H02M 7/5387* (2007.01)

(52) Cooperative Patent Classification (CPC):
**H02P 1/46; H02M 1/14; H02M 1/325; H02M 7/487;
H02M 7/53876; H02P 21/0025; H02P 21/04;
H02P 29/028**

(54) **METHOD FOR CONTROLLING A DEGRADED CONVERTER, AND CONVERTER SYSTEM**

VERFAHREN ZUR STEUERUNG EINES DEGRADIERTEN WANDLERS UND WANDLERSYSTEM

PROCÉDÉ DE COMMANDE DE CONVERTISSEUR DÉGRADÉ ET SYSTÈME DE
CONVERTISSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2024 Bulletin 2024/02**

(73) Proprietor: **ABB SCHWEIZ AG**
**5400 Baden (CH)**

(72) Inventor: **BOILLAT, David**
**5246 Scherz (CH)**

(74) Representative: **Sykora & König Patentanwälte
PartG mbB
Maximilianstraße 2
80539 München (DE)**

(56) References cited:
**CN-A- 114 421 794**

• **XU SHI-ZHOU ET AL: "An Improved Fault-
Tolerant Control Strategy for High-Power ANPC
Three-Level Inverter Under Short-Circuit Fault of
Power Devices", IEEE ACCESS, vol. 7, 29 April
2019 (2019-04-29), pages 55443 - 55457,
XP011723450, [retrieved on 20190506], DOI:
10.1109/ACCESS.2019.2913594**
• **MATOS DIOGO B ET AL: "Performance of a
synchronous reluctance motor drive with a fault-
tolerant three-level neutral point clamped
inverter", 2016 XXII INTERNATIONAL
CONFERENCE ON ELECTRICAL MACHINES
(ICEM), IEEE, 4 September 2016 (2016-09-04),
pages 1152 - 1159, XP032989494, [retrieved on
20161102], DOI: 10.1109/
ICELMACH.2016.7732670**

EP 4 304 082 B1

## EP 4 304 082 B1

**Description**

FIELD OF THE INVENTION

The invention relates to the field of (high)-power converter control. In particular, the invention relates to a method, a computer program, a computer-readable medium and a controller for controlling an electrical converter. The invention also relates to an electrical converter system.

BACKGROUND OF THE INVENTION

In particular in medium voltage applications, an electrical converter topology with higher output voltage quality than a 2L topology is given by the 3L (A)NPC topology. Here, 2L and 3L means 2 level and 3 level, respectively, and (A)NPC means (active) neutral point clamped.

One of the main advantages of the 3L topology are the smaller voltage steps that can be generated at the converter output compared to its 2L counterpart. The smaller voltage steps lead to a reduced current THD (total harmonic distortion) and accordingly to lower harmonic losses in a machine connected to the converter. Moreover, a smaller amount of overvoltage result at the machine-terminals due to the smaller voltage step-size at the switching instances. Finally, the smaller voltage steps also reduce the machine-side CM (common mode) voltage. However, there may be cases, in which a phase of such a three-phase (high)-power converter partially fails (e.g., failed phase-leg can still be connected to the neutral point of the split DC-link). Typically, in such a case, a motor, which stands still is not or even hardly brought up to speed (e.g., nominal speed).

Purely three-phase sinusoidal RST-references of the motor currents, i.e., a purely positive sequence of the references at the stator frequency, lead to a constant (nominal) torque of the motor. However, in case of a partial failure in one phase-leg and with such references of the motor currents, it is not possible to equalize the partial DC-link voltages of the 3-level topology with the three-phase (high)-power converter for a given ratio between rated output current and value of the DC-link capacitance (e.g., in the range of 280 A/mF) and lower speeds (e.g., lower than 60 Hz electric). It is assumed that the (measured) motor currents closely follow their references. A peak-to-peak voltage ripple of the partial DC-link voltages lower or equal to ¼ of the nominal DC-link voltage value is considered to be equalized partial DC-link voltages. For a nominal DC-link voltage of 800 V, a maximum peak-to-peak partial DC-link voltage ripple of 200 V can be tolerated.

Accordingly, the operation of the converter within the safe operation area (SOA) of the power semiconductors for operation conditions with constant torque is not possible anymore for lower speeds. This is because a time to pass over an angular interval, in particular two 60° intervals within one fundamental period of 360°, is rather long and during such an interval one of the two DC-link capacitors is only discharged from the load side (no charging possible), while driving, and only charged from the load side while braking (no discharging possible).

For higher speeds (e.g., higher than 60 Hz electric), the time to pass the angular intervals is short enough to lead to an acceptable ripple of the partial DC-link voltages and hence also an operation of the power semiconductors within the SOA.

Furthermore, even outside the two mentioned 60 deg intervals, for residing angles, perfect equalization of the partial DC-link voltages is also not guaranteed.

It is a challenge to ramp up speed with a partially degraded converter, in particular without having significant reduction in achievable (instantaneous) torque or creating large torque ripples. In particular, the average of the absolute value of the torque over one fundamental period should be maximized, the torque ripple should be minimized, and the speed, up to which the average torque can be kept constant (or almost constant), should be maximized.

WO 2018 029303 A1 relates to a two stage control of a converter system with floating filter cells, in which the floating filter cells are directly controlled.

EP 3 709 497 A1 describes a cascaded real-time pulse width modulation approach, where the main converter is modulated with a low switching frequency and subsequent filtering stages with filter cells are modulated with an increasing switching frequency.

In EP 2 469 692 A1, optimized pulse patterns are modified based on model predictive control. Pre-computed optimized pulse pattern switching angles are modified online in order to follow a flux trajectory.

EP 3 729 637 A1 relates to model predictive control of a converter based on pulse width modulation. Pulse patterns are created with a mathematical representation of pulse width modulation and modified with model predictive control.

WO 2019 137 916 A1 relates to model predictive control of a converter based on pulse width modulated switching patterns without filter cells.

XU SHI-ZHOU ET AL: "An Improved Fault-Tolerant Control Strategy for High-Power ANPC Three-Level Inverter Under Short-Circuit Fault of Power Devices", IEEE ACCESS, vol. 7 , pages 55443-55457, relates to fault-tolerant control operation of an ANPC three-level inverter. The appropriate switch state and switch sequence are selected in case of short-circuit faults during operation allowing for continued operation at lower current amplitudes.

CN 114 421 794 A describes a model predictive control method with a cost function comprising a combination of reference currents and dc link voltage terms in order to maintain the operation, after a short circuit fault occurred.

MATOS DIOGO B ET AL: "Performance of a synchronous reluctance motor drive with a fault-tolerant three-level neutral point clamped inverter", 2016 XXII INTERNATIONAL CONFERENCE ON ELECTRICAL MACHINES (ICEM), IEEE, 4 September 2016 (2016-0904), pages 1152-1159, teaches fault-tolerant control to maintain the operation of a converter after a short circuit fault occurred.

DESCRIPTION OF THE INVENTION

It is an objective of the invention to improve the control of an electrical converter in case of a phase failure and/or to allow motor operation after all. Further objectives of the invention are to reduce the computational demand of such a control method.

These objectives are achieved by the subject-matter of the independent claims. Further exemplary embodiments are evident from the dependent claims and the following description.

An aspect of the invention relates to a method for controlling an electrical converter. The electrical converter may be a low or medium voltage converter, in particular for processing voltages of 400 V, 800 V or higher.

According to the the invention, the electrical converter is configured for converting a DC voltage from a split DC-link into a three-phase output voltage to be supplied to three output phases, wherein for each output phase, the electrical converter has a changeover switch configured for generating three voltage levels. According to an embodiment of the invention, due to an internal failure in one of the changeover switches, this switch is permanently in a neutral position and/or is permanently producing a neutral voltage level for the respective output phase. The converter is adapted for converting a DC-current into an alternating current, in particular a three-phase alternating current. On the first side and/or input side, the converter is connected to a DC-link, on the second side the converter, and/or the output side, the converter is connected or connectable to a motor.

Each changeover switch may be provided by a half-bridge and/or each changeover switch may be composed of semiconductor switches. For example, each changeover switch may be an active neutral point clamped half-bridge and/or the converter is a 3-level active neutral point clamped converter.

According to the invention, the method comprises: calculating a component of a degraded mode reference current for each of the phases; determining a voltage reference from the degraded mode reference current; and switching the electrical converter to generate (in particular in average) the voltage reference in the output phases.

The degraded mode reference currents with components $I_{a,w}$, $I_{b,w}$, and $I_{c,w}$ for the three output phases $a, b, c$ are determined for instance by

$$\begin{cases} I_{P(i,1),w}(\theta) = y(\theta) \cdot \hat{I}_{S,w} - \dfrac{y(\theta) + x(\theta) + \tilde{x}(\theta)}{3} \cdot \hat{I}_{S,w} \\[2mm] I_{P(i,2),w}(\theta) = x(\theta) \cdot \hat{I}_{S,w} - \dfrac{y(\theta) + x(\theta) + \tilde{x}(\theta)}{3} \cdot \hat{I}_{S,w} \\[2mm] I_{P(i,3),w}(\theta) = \tilde{x}(\theta) \cdot \hat{I}_{S,w} - \dfrac{y(\theta) + x(\theta) + \tilde{x}(\theta)}{3} \cdot \hat{I}_{S,w} \end{cases} .$$

P is a permutation matrix of the three phases and i = 1.. 3. The permutation matrix is in this case written as

$$P = \begin{bmatrix} a & b & c \\ b & c & a \\ c & a & b \end{bmatrix}.$$

$\hat{I}_{S,w}$ is a reference current, which may be or may be similar to an amplitude of symmetrical three-phase reference currents. A fundamental period of the degraded mode reference currents is parametrized by $\theta$; wherein $x(\theta)$ is chosen from $\{x_n(\theta), x_p(\theta)\}$ with $-1 \leq x_n(\theta) \leq 0$, $0 \leq x_p(\theta) \leq 1$, and wherein $\tilde{x}(\theta)$ and $y(\theta)$ are chosen in dependence of $x(\theta)$ by

$$\tilde{x}(\theta) = k_x(\theta) \cdot x(\theta) \text{ with } -1 \leq k_x(\theta) \leq 0,$$

$$y(\theta) \in \left[-k_y(\theta), k_y(\theta)\right] \text{ with } 0 \leq k_y(\theta) \leq 1.$$

The current amplitude $\hat{I}_{S,w}$ may be an amplitude and/or magnitude of symmetrical three-phase reference currents, which is determined for a normal mode operation of the electrical converter, i.e. when there is no degraded phase. As will be shown below, with such a choice of the degraded mode reference currents, the current references for normal operation incorporating the amplitude $\hat{I}_{S,w}$ are modified to more or less equalize the partial DC-link voltages, ideally over one switching cycle, and to maximize the absolute value of the torque of a motor connected to the output of the electrical converter.

The three voltage references at the converter's output can be mapped to a complex voltage space vector in the complex plane. This voltage space vector circulates and/or steps for example through six sectors, into which the complex plane is divided around the origin. For example, a sector I may be situated between the real axis, which corresponds in the complex plain to the *a*-component, and a line above the real axis having an angle of 60° with the real axis. Similar, the three-phase reference currents can also be mapped to a complex current space vector in the complex plane. When one assumes that there is a failure in phase-leg *a* and that the first column of the permutation matrix *P* is chosen, the above choice of equations for the degraded mode reference currents results in an almost equal loading of the partial DC-link voltage in Sector II (60°-120°) and Sector V. (240°-300°). Furthermore, the degraded mode reference currents allow to balance the partial DC-link voltage during the dwell-time of the zero voltage space sector during space vector modulation, especially for lower modulation indices (for example below 0.3). According to an embodiment of the invention, the degraded mode reference currents with components $I_{a,w}$, $I_{b,w}$, and $I_{c,w}$ are determined as a repeating sequence of six or less options. The mentioned maximum six options result for $x(\theta) = x_n(\theta)$ with $i = 1.. 3$ and $x(\theta) = x_p(\theta)$ with $i = 1.. 3$. The options may be associated with the sectors described above.

According to an embodiment of the invention, the angles $\theta_j$ at which an actual option changes to a next option are determined based on a resulting torque of an electrical motor supplied by the electrical converter. The angle may be determined by computing and/or simulation and/or measuring.

The torque of a motor which is connected to the output of the converter depends on the angle $\theta$ and can be calculated, for example for a permanent magnet synchronous machine, by

$$M(\theta) = \frac{3 \cdot p}{2} \cdot \left( I_{q,w}(\theta) \cdot \psi_0 + I_{d,w}(\theta) \cdot I_{q,w}(\theta) \cdot \left( L_d - L_q \right) \right)$$

The angle $\theta$ represents the reference angle of the *d*-axis. $\psi_0$ is the flux linkage of the permanent magnet and $L_d$ and $L_q$ are the direct and quadrature axis inductances, respectively.

According to an embodiment of the invention, the next option is selected, if the resulting torque is higher than a resulting torque of the actual option for driving and lower than the one of the actual option for braking. The most suitable values of the parameters, and for each option may be determined by weighting the maximum achievable absolute torque against the resulting partial DC-link voltage ripple. The maximum torque per Ampère is obtained for $k_y = 0$. However, for certain options, the resulting peak-to-peak partial DC-link voltage ripple is with this parameter choice, depending on the motor speed, higher than specified. In this case, $k_y$ may be increased or, if no further increase of $k_y$ is possible, the option at hand can be omitted. The resulting values of the parameters can be stored in a LUT or calculated on-line.

According to an embodiment of the invention, the degraded mode reference currents are determined depending on normal mode reference currents, where the normal mode reference currents are determined under the condition that all three changeover switches of the electrical converter would be freely switchable. In particular, the amplitude $\hat{I}_{S,w}$ of the symmetrical three-phase reference currents can be determined by

$$\hat{I}_{S,w} = \alpha \cdot \sqrt{\hat{I}_{d,w}^2 + \hat{I}_{q,w}^2} \text{ with } 0 \leq \alpha \leq 10;$$

i.e., may be the length of the normal mode reference current vector $\hat{I}_{dq,w}$ in the *dq* coordinate system. The current $\hat{I}_{dq,w}$ can for example be computed based on a MTPA (Maximum Torque Per Ampère) curve.

According to an embodiment of the invention,

$$x(\theta) = x_1(\theta) \cdot \sin(\theta + \varphi_{x1}),$$

$$\tilde{x}(\theta) = -\tilde{x}_1(\theta) \cdot \sin(\theta + \varphi_{x1}),$$

$$y(\theta) = y_1(\theta) \cdot \cos(\theta + \varphi_{y1}),$$

wherein

$$x_1(\theta) \in \{x_{n,1}(\theta), x_{p,1}(\theta)\} \text{ with } -1 \leq x_{n,1}(\theta) \leq 0 \text{ and } 0 \leq x_{p,1}(\theta) \leq 1,$$

$$\tilde{x}_1(\theta) = k_{x,1}(\theta) \cdot x_1(\theta) \text{ with } -1 \leq k_{x,1}(\theta) \leq 0,$$

$$y_1(\theta) \in \left[-k_{y,1}(\theta), k_{y,1}(\theta)\right] \text{ with } 0 \leq k_{y,1}(\theta) \leq 1.$$

This embodiment allows to shift the angular dependence of the current, e.g., by selecting appropriated values of $\varphi_{x1}$ and/or $\varphi_{y1}$. Appropriated in this context means that the average torque is maximized and/or the partial DC-link voltage ripple is minimized. These conditions may be in particular favorable for higher motor speeds.

According to an embodiment of the invention, the components $I_{a,w}$, $I_{b,w}$, and $I_{c,w}$ may be determined by the following set of equations:

$$I_{a,w} \approx \frac{2 \cdot y(t)}{3} \cdot \hat{I}_{S,w} \qquad\qquad I_{a,w} \approx -x(t) \cdot \hat{I}_{S,w} \qquad\qquad I_{a,w} \approx x(t) \cdot \hat{I}_{S,w}$$

$$I_{b,w} \approx x(t) \cdot \hat{I}_{S,w} \qquad \text{or} \qquad I_{b,w} \approx \frac{2 \cdot y(t)}{3} \cdot \hat{I}_{S,w} \qquad \text{or} \qquad I_{b,w} \approx -x(t) \cdot \hat{I}_{S,w}$$

$$I_{c,w} \approx -x(t) \cdot \hat{I}_{S,w} \qquad\qquad I_{c,w} \approx x(t) \cdot \hat{I}_{S,w} \qquad\qquad I_{c,w} \approx \frac{2 \cdot y(t)}{3} \cdot \hat{I}_{S,w}$$

wherein $\hat{I}_{S,w}$ is a reference current, such as the amplitude of the reference currents of the motor with all three changeover switches freely switchable, such as the normal mode reference currents, and $|y(t)| \ll |x(t)|$ and $x(t) \approx -\hat{x}(t)$, $x(t) \geq 0$ and, $y(t) \leq 0$. The reference currents as calculated for a non-degraded converter may be chosen as base for the calculation for the degraded converter. In this way, necessary calculations may be reduced.

According to an embodiment of the invention, the parameters $x_n(\theta)$, $x_p(\theta)$, $k_x(\theta)$, $k_y(\theta)$ are chosen, such that a resulting torque of a motor supplied by the electrical converter is maximized.

The parameters may be chosen, such that in at least a range of $\theta$, a first component $I_{a,w}$ of the of degraded mode reference current is at least 10 times smaller than the other two components $I_{b,w}$, and $I_{c,w}$ of the degraded mode reference currents. The first component may be chosen to be very small or zero.

The parameters may be chosen, such that in at least a range of $\theta$, a second degraded mode reference current $I_{b,w}$ has nearly the same absolute value but opposite sign as a third degraded mode reference current $I_{c,w}$.

Preferably, the voltage reference space vector is realized with the nearest space vectors realizable at the converter's output. In this manner, the next switching signals are computed.

According to an embodiment of the invention, switching commands for the electrical converter are determined from the voltage reference via reduced space vector modulation. In reduced space vector modulation, solely space vectors are used, which only comprise a neutral level of a degraded phase, for which the switch is solely generating a neutral voltage level. In such a way, the converter can be operated, even with the failure in the degraded phase.

According to an embodiment of the invention, orthogonal space vectors are used for generating an output voltage space vector, where the orthogonal space vectors sum up to the output voltage space vector. It also may be that orthogonal space vectors and the zero space vector are used for generating an output voltage vector, where the orthogonal space vectors and the zero space vector sum up to the output voltage space vector.

In general, a specific output voltage space vector, as commanded by the voltage references, is determined as a sum of two or more scaled space vectors, which encode a specific switch position of the converter. The ratio of the scaling factors of the space vectors is used as a ratio of time intervals, in which the converter is switched to the switch position as commanded by the corresponding space vector.

In reduced space vector modulation, orthogonal space vectors can be used, which results in more dwell time of the zero space vector, i.e. when the zero space vector is applied to the converter (located at the origin of the complex plane).

According to an embodiment of the invention, the converter is switched between a pair of complementary space vectors, when a zero space vector should be applied at the converter output. Whenever, the modulation scheme sets a zero space vector, which for example may correspond to a neutral output level in all three phases, this may be replaced by switching between complementary space vectors. A pair of complementary space vectors sums up to 0, i.e., the zero space vector. In such a way, the DC link capacitors can be balanced during the dwell time of the zero space vector.

To balance the DC link capacitors, the pair of complementary space vectors may be chosen, such that a difference of the voltages across the DC link capacitors becomes minimal.

According to the invention, the method further comprises: calculating a normal mode reference current for the converter, for example, from a torque reference or a speed reference of an electric motor supplied by the electrical converter; detecting a failure in the electrical converter, which causes the electrical converter to solely generate a neutral output level in one failed output phases; in the case no failure is detected: determining the voltage reference from the normal mode reference current; and in the case, the failure is detected: determining the voltage reference from the degraded mode reference current.

As described above, the degraded mode reference current may be determined from the normal mode reference current. In such a way, the method may be simply integrated into a controller and/or an existing control scheme.

According to an embodiment of the invention, the voltage references are determined from the degraded mode reference currents, when a reference output frequency (such as a stator frequency) for the electrical converter is smaller than a frequency threshold. The method may solely be performed, when an electrical motor supplied by the converter has low speed. Usually, only in this case, the DC-link capacitors can become severely unbalanced. For example, when a motor should be speed up from standing still and one of the phases of the converter has a failure, for lower speed operation, first the method as described herein will be applied. When a specific speed has been reached, then a normal operation mode employing the normal mode reference currents may be utilized.

A further aspect of the invention relates to a computer program for controlling an electrical converter, which, when being executed by a processor, is adapted to carry out the steps of the method as described above and below. A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. In general, the computer-readable medium may be a non-transitory or transitory medium.

A further aspect of the invention relates to a controller for controlling an electrical converter adapted for performing the method as stated above and below. The controller may comprise one or more processors, in which the method is run as software. It also may be that the method is at least partially or completely implemented in hardware, such as a DSAP or FPGA.

A further aspect of the invention relates to an electrical converter system, which comprises an electrical converter configured for converting a DC voltage from a split DC-link into three-phase output voltages to be supplied to three output phases, wherein for each output phase, the electrical converter has a changeover switch configured for generating three voltage levels. The electrical converter system further comprises a controller as described above.

In general, it has to be understood that features of the method as described in the above and in the following may be features of the computer program, the computer-readable medium, the controller and the electrical converter as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter system according to an embodiment of the invention.

Fig. 2 shows a schematic block diagram of a controller according to an embodiment of the invention.

Fig. 3 shows a space vector modulation (SVM) diagram according to an embodiment of the invention.

Fig. 4 shows a space vector modulation (SVM) diagram according to an embodiment of the invention.

Fig. 5 shows a diagram with several torque lines over time.

Fig. 6 shows a diagram with torque and current over time according to an embodiment of the invention.

Fig. 7 shows a diagram with torque and current over time according to an embodiment of the invention.

Fig. 8 shows a space vector modulation (SVM) diagram according to an embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

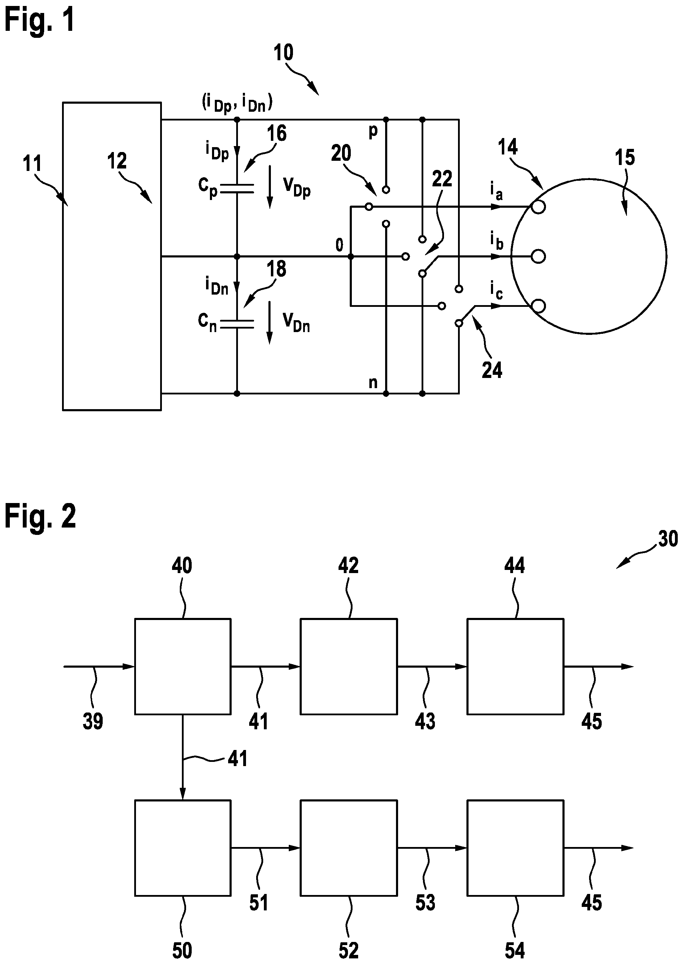

Fig. 1 shows an electrical converter system 8 with an electrical converter 10 with a DC input side 12 and an AC output side 14. The DC input side 12, which comprises a positive input connected to a positive potential, a negative input connected to a negative potential and potentially a neutral point input connected to a neutral potential. The DC input side 12 may be supplied by a rectifier 11, for example. Two DC-link capacitors 16, 18 may be connected between these inputs. The DC-link capacitor 16 is arranged between the positive input and the neutral point input, while the DC-link capacitor 18 is arranged between the negative input and the neutral point input.

The AC output side provides three-phase outputs with the phases *a, b* and *c*. The AC output side 14 is connected to an electrical motor 15.

The electrical converter 10 may be a 3-level ANPC inverter and/or comprises three changeover switches 20, 22 and 24 for selectively connecting the respective phase *a, b, c* with the positive potential, the negative potential or the neutral potential. The changeover switches 20, 22, 24 are composed of semiconductor switches, such as Insulated-Gate Bipolar Transistors (IGBTs) or Metal Oxide Semiconductor Field-Effect Transistors (MOSFETs).

Due to a partial failure, changeover switch 20, which is assigned here to phase *a* as an example, but which also could be assigned to one of the other phases b and c, is connected permanently to the neutral point. With such a failure, a start-up of the motor 15 connected to the electrical converter 10 may become problematic with known Space Vector Modulation (SVM), since the voltages $V_{Dp}$ and $V_{Dn}$ across the DC-link capacitors 16 and 18, respectively, may become unbalanced, which may result in a drastic exceedance of the blocking voltage of the semiconductor switches.

Even with a degraded electrical converter 10, an operation at constant torque is desirable. However, for operation with constant torque, due to the partially failed changeover switch 20, there are 2 x 60° intervals over one fundamental electric period, where one DC-link capacitor 16, 18 is, from the load side, only discharged while driving or charged while braking. In particular, no charging is possible by any Space Vector (SV) in these intervals. For example, $V_D$ = 800 V, $f_0$ = 1 Hz, $C_n$ = 2 mF, $i_{Dn}$ (avg.) = 37 A would result in $\Delta V_D = |V_{Dp} - V_{Dn}| \approx 3$ kV.

Thus, in one approach, the torque could be reduced, in particular in the two 60° intervals stated above, which would however lead to a considerable torque ripple. Alternatively, the conditions according to the present invention can be chosen, which will be exemplified below.

Fig. 2 shows a block diagram for a controller 30. The controller 30 is configured to control the converter 10. The controller 30 receives a torque or speed reference 39 as an input. In a first module 40, current references 41 for the three output currents are calculated. In a module 42, a normal mode voltage reference 43 is calculated. From the normal mode voltage reference 43, the SVM module 44 determines with space vector modulation (SVM) switching commands 45 for the electrical converter 10.

If one of the changeover switches 20, 22, 24 is blocked, due to a failure, and if optionally, the fundamental frequency of the output current is smaller than a threshold, a degraded mode operation is performed.

In this case, the output 41 of the first module 40, being the reference currents 41 with associated amplitude $\hat{I}_{S,w}$, is provided to a module 50 for calculating degraded mode reference currents 51. In module 52, the degraded mode reference currents 51 are transformed into a degraded mode reference voltage 53. From the degraded mode voltage reference 53, a further SVM module 54 determines with reduced space vector modulation switching commands 45 for the electrical converter 10.

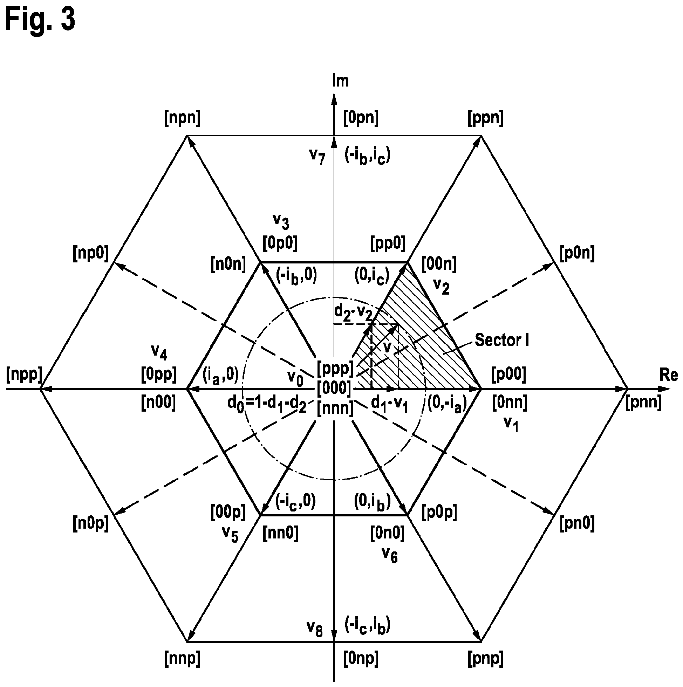

Fig. 3 shows a space vector modulation (SVM) diagram, which is used by the module 44 and/or 54. The diagram shows space vectors corresponding to the different switching states and/or switching positions of the converter 10. The inscribed hexagon shape depicts the space vectors $v_0$ to $v_6$. The space vectors $v_1$ to $v_6$ have an equal length. The sector between $v_1$ and $v_2$ is the first sector. The diagram shows six sectors each having a 60° angular width. During space vector modulation, the switching commands are generated based on the switching positions, which are for example the nearest to the reference vector v.

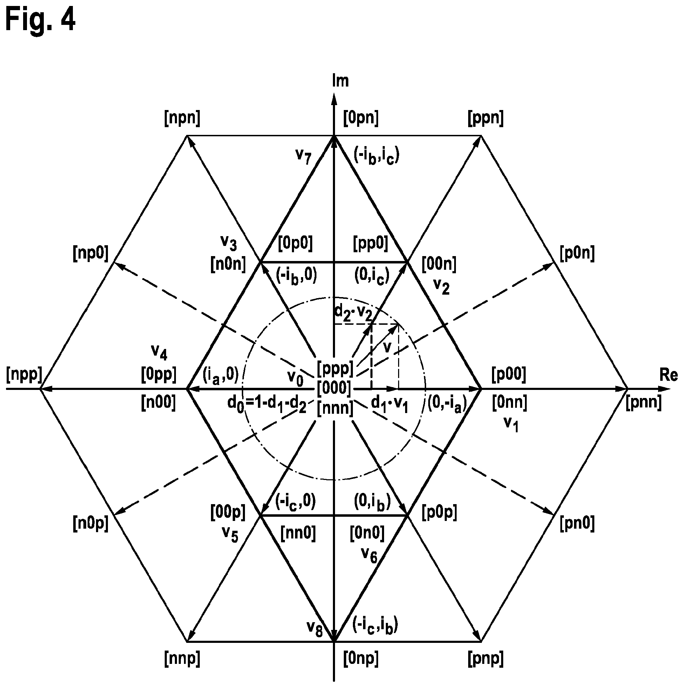

Fig. 4 shows a space vector modulation diagram, which is used by the module 54, i.e., for reduced space vector modulation. Here, solely space vectors within the depicted diamond shape are used (i.e., applicable at the converter output). The diamond is rotated by 60° for a failure in a different phase than phase *a*. It is also possible to solely use the orthogonal vectors $v_1$, $v_7$, $v_4$, $v_8$ together with the zero vector $v_0$. Vector $v_1$ and vector $v_4$ are the same as in Fig. 3 and oppose each other. Vector $v_7$ and vector $v_8$ are orthogonal to the vectors $v_1$ and $v_4$ and/or have a larger length. Space vector modulation with solely the space vectors within the diamond shape, in particular solely with orthogonal space vectors, facilitates the equalization of the partial DC-link voltages (e.g., for $I_a = 0$), because the usage of $v_7$ and $v_8$ directly leads to an equal loading of the upper and the lower DC-link capacitor 16, 18 from the load side.

It is further possible that the converter 10 is switched between complementary space vectors, when a zero space vector (e.g., $v_0$) should be applied to the converter 10. This is possible in both modulation schemes, such as shown in Fig. 3 and 4. Pairs of complementary space vectors are two space vectors that sum up to 0, such as $v_1$ and $v_4$, or $v_7$ and $v_8$. For the time, when the zero space vector should be applied to the converter 10, the converter 10 is switched between the complementary space vectors, such that an average value of 0 is applied. The usage of complementary space vectors instead of the zero space vector allows for equalizing the voltages $V_{Dp}$ and $V_{Dn}$ across the DC-link capacitors 16 and 18, respectively.

The complementary space vectors can be chosen, such that a difference of the voltages across the DC-link capacitors 16, 18 becomes minimal. For this the effect of the complementary space vectors on the loading of the DC-link capacitors, given by the actual phase output currents, has to be considered. For example, $(0, -i_a)$ and $(i_a, 0)$ for the space vectors $v_1$ and $v_4$.

It has to be noted that it is also possible that module 54 performs space vector modulation, such as described with respect to Fig. 3.

In the following, the transformation of the normal mode current reference into the degraded mode reference current 51, which is done by module 50, is described.

With respect to Fig. 3 and 4, for example considering Sector I with the assumption that the fundamental component of the output phase currents and the output phase voltages (each having three components) of the electrical converter 10 are nearly in phase ($\cos(\Phi) \approx 0.85$ typically). To equalize the two partial DC-link voltages across the capacitors 16, 18 over one switching cycle outside the dwell-time interval of the zero space vector, $d_1 \cdot I_{a,w} = d_2 \cdot I_{c,w}$ needs to hold, where $d_1$ and $d_2$ are the dwell duty-cycles for the space vectors $v_1$ and $v_2$, respectively. As already mentioned, $I_{a,w}$, $I_{b,w}$, and $I_{c,w}$ denote the components of the reference output currents.

This results in a first set of conditions

$$\begin{cases} d_1 \cdot I_{a,w} - d_2 \cdot I_{c,w} = 0 \\ I_{a,w} + I_{b,w} + I_{c,w} = 0 \end{cases}.$$

It is not practicable that the reference currents depend on the dwell duty-cycles of the employed space vectors. Nevertheless, improved conditions to achieve equalized partial DC-link voltages can be derived. In case that an equalization of the partial DC-link voltages over a switching cycle is not possible outside the dwell-time interval of the zero space vector, it can be considered that the dwell-time of the zero space vector can be utilized to equalize the partial DC-link voltages. Generally, due to the absence of complementary space vectors for the reduced space vector modulation, the dwell-time of the zero space vector provides a further possibility to equalize the partial DC-link voltages. During the dwell-time of the zero space vector the equalization of the partial DC-link voltages is achieved by applying the two space vectors of a (complementary) space vector pair such that the sum of the two space vector results in the zero space vector (e.g., the two space vectors are applied to an equal amount of time for equal partial DC-link voltages). A space vector pair comprises two space vectors with opposite directions, such as $v_1$ and $v_4$, $v_2$ and $v_5$, $v_3$ and $v_6$, and $v_7$ and $v_8$.

From $d_1 \cdot I_{a,w} = d_2 \cdot I_{c,w}$ it can be deduced that $I_{a,w}$ and $I_{c,w}$ need to have the same sign, since $d_1 \geq 0$ and $d_2 \geq 0$. Accordingly, $I_{b,w}$ has the opposite sign of $I_{a,w}$ and $I_{c,w}$ because usually the sum of the three currents needs to be zero, for example for an open star-point of the motor 15.

It is noted that even in the case of $d_1 \cdot I_{a,w} \neq d_2 \cdot I_{c,w}$, the equalization of the partial DC-link capacitors 16, 18 can be achieved by applying a space vector pair during the dwell time of the zero vector as follows:

- $d_1 \cdot I_{a,w} > d_2 \cdot I_{c,w}$ for $I_{a,w} \geq 0$ and $I_{c,w} \geq 0$, with $d_1 \cdot I_{a,w}$ and $d_2 \cdot I_{c,w}$ having the same order of magnitude: the pair with $v_2$ and $v_5$ (phase c) can be employed for equalization;
- $d_1 \cdot I_{a,w} > d_2 \cdot I_{c,w}$ for $I_{a,w} \leq 0$ and $I_{c,w} \leq 0$, with $d_1 \cdot I_{a,w}$ and $d_2 \cdot I_{c,w}$ having the same order of magnitude: the pair with $v_1$ and $v_4$ (phase a) can be employed for equalization;
- $d_1 \cdot I_{a,w} < d_2 \cdot I_{c,w}$ for $I_{a,w} \geq 0$ and $I_{c,w} \geq 0$, with $d_1 \cdot I_{a,w}$ and $d_2 \cdot I_{c,w}$ having the same order of magnitude: the pair with $v_1$ and $v_4$ (phase a) can be employed for equalization;
- $d_1 \cdot I_{a,w} < d_2 \cdot I_{c,w}$ for $I_{a,w} \leq 0$ and $I_{c,w} \leq 0$, with $d_1 \cdot I_{a,w}$ and $d_2 \cdot I_{c,w}$ having the same order of magnitude: the pair with $v_2$ and $v_5$ (phase c) can be employed for equalization;
- $d_1 \cdot I_{a,w} \gg d_2 \cdot I_{c,w}$ for $I_{a,w} \geq 0$ and $I_{c,w} \geq 0$: needs to be avoided (avoided while driving and braking);
- $d_1 \cdot I_{a,w} \gg d_2 \cdot I_{c,w}$ for $I_{a,w} \leq 0$ and $I_{c,w} \leq 0$: the pair with $v_3$ and $v_6$ (phase b) can be employed for equalization (assuming that $|d_2 \cdot I_{c,w}|$ and $|d_0 \cdot I_{b,w}|$ are in a similar range, which is typically given for low modulation indices [< 0.3]);
- $d_1 \cdot I_{a,w} \ll d_2 \cdot I_{c,w}$ for $I_{a,w} \geq 0$ and $I_{c,w} \geq 0$: the pair with $v_3$ and $v_6$ (phase b) can be employed for equalization (assuming that $|d_2 \cdot I_{c,w}|$ and $|d_0 \cdot I_{b,w}|$ are in a similar range, which is typically given for low modulation indices [< 0.3]);

- $d_1 \cdot I_{a,w} \ll d_2 \cdot I_{c,w}$ for $I_{a,w} \leq 0$ and $I_{c,w} \leq 0$: needs to be avoided (avoided while driving and relaxed while braking).

This results in a second set of conditions

$$\text{Sector I:} \begin{cases} I_{a,w} \leq 0 \\ I_{b,w} \geq 0 \\ I_{c,w} \leq 0 \\ I_{a,w} + I_{b,w} + I_{c,w} = 0 \end{cases},$$

$$\text{Sector II} + \text{Sector III:} \begin{cases} I_{a,w} \leq 0 \\ I_{b,w} \leq 0 \\ I_{c,w} \geq 0 \\ I_{a,w} + I_{b,w} + I_{c,w} = 0 \end{cases},$$

$$\text{Sector IV} + \text{Sector V:} \begin{cases} I_{a,w} \geq 0 \\ I_{b,w} \leq 0 \\ I_{c,w} \geq 0 \\ I_{a,w} + I_{b,w} + I_{c,w} = 0 \end{cases},$$

$$\text{Sector VI:} \begin{cases} I_{a,w} \geq 0 \\ I_{b,w} \geq 0 \\ I_{c,w} \leq 0 \\ I_{a,w} + I_{b,w} + I_{c,w} = 0 \end{cases}.$$

In the following it is described, how the reference current need to be selected to maximize the torque for the following conditions (see Sector I)

$$I_{a,w} \leq 0, I_{b,w} \geq 0, I_{c,w} \leq 0.$$

For a reference current with components, which are limited in their maximum absolute value, the maximum positive torque is for instance nearly obtained over the entire range from 270° to 150° in the following way.

$$I_{a,w} = 0, I_{b,w} = \hat{I}_{S,w}, I_{c,w} = -\hat{I}_{S,w}$$

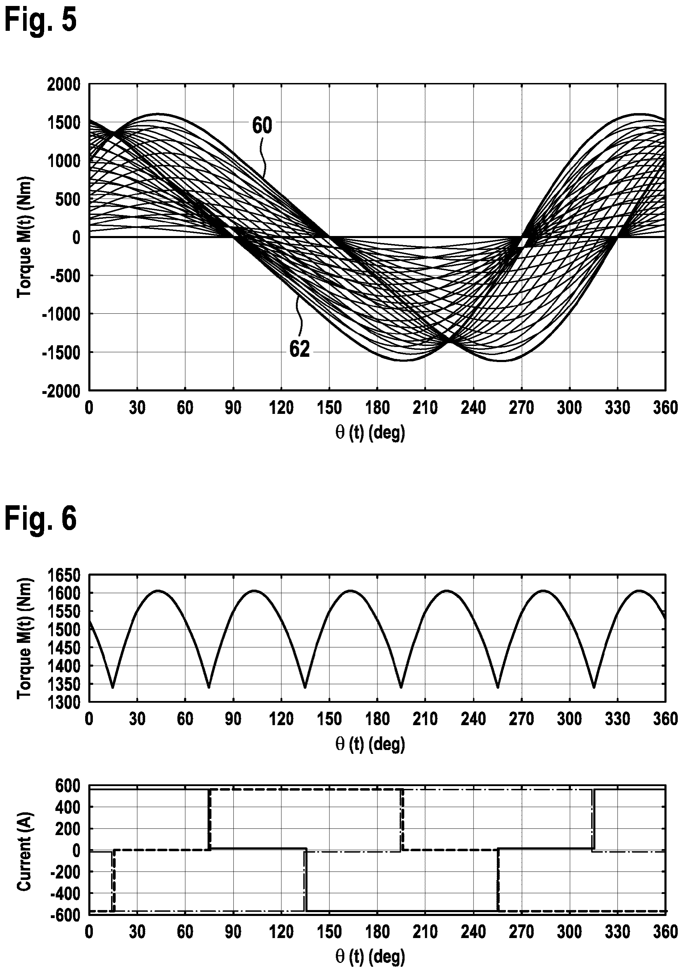

(line 62 in Fig. 5)

$$I_{a,w} = -\hat{I}_{S,w}, I_{b,w} = \hat{I}_{S,w}, I_{c,w} = 0$$

(line 60 in Fig. 5)

In Fig. 5, several examples for torque lines under different conditions are depicted.

$\hat{I}_{S,w}$ (with scaling factor $\alpha$) may be given by

$$\hat{I}_{S,w} = \alpha \cdot \sqrt{\hat{I}_{d,w}^2 + \hat{I}_{q,w}^2}.$$

Optionally, the maximum torque $M_{max}$ may be calculated and $\hat{I}_{S,w}$ can be adjusted such that $M_{max}$ corresponds to the desired reference torque.

The conditions $I_{a,w} = -\hat{I}_{S,w}, I_{b,w} = \hat{I}_{S,w}, I_{c,w} = 0$ may need to be relaxed (i.e., lower torque achieved) in order to improve the partial DC-link voltage equalization.

This results in a third set of conditions:

$$\text{Sector I: (1)} \begin{cases} I_{a,w} = 0 \\ I_{b,w} = \hat{I}_{S,w} \\ I_{c,w} = -\hat{I}_{S,w} \end{cases} \text{or (2)} \begin{cases} I_{a,w} = -\hat{I}_{S,w} \\ I_{b,w} = \hat{I}_{S,w} \\ I_{c,w} = 0 \end{cases},$$

$$\text{Sector II + Sector III: (3)} \begin{cases} I_{a,w} = -\hat{I}_{S,w} \\ I_{b,w} = 0 \\ I_{c,w} = \hat{I}_{S,w} \end{cases} \text{or (4)} \begin{cases} I_{a,w} = 0 \\ I_{b,w} = -\hat{I}_{S,w} \\ I_{c,w} = \hat{I}_{S,w} \end{cases},$$

$$\text{Sector IV + Sector V: (4)} \begin{cases} I_{a,w} = 0 \\ I_{b,w} = -\hat{I}_{S,w} \\ I_{c,w} = \hat{I}_{S,w} \end{cases} \text{or (5)} \begin{cases} I_{a,w} = \hat{I}_{S,w} \\ I_{b,w} = -\hat{I}_{S,w} \\ I_{c,w} = 0 \end{cases},$$

$$\text{Sector VI: (6)} \begin{cases} I_{a,w} = \hat{I}_{S,w} \\ I_{b,w} = 0 \\ I_{c,w} = -\hat{I}_{S,w} \end{cases} \text{or (1)} \begin{cases} I_{a,w} = 0 \\ I_{b,w} = \hat{I}_{S,w} \\ I_{c,w} = -\hat{I}_{S,w} \end{cases}.$$

Like determined for Sector I, it can be shown that the same conclusions hold also for the other sectors: the maximum torque is obtained in case one reference current component is zero and the two remaining reference current components have equal absolute values but opposite signs.

Fig. 6 shows an example of three reference current components over time, which has piece-wise constant components in the respective sectors obeying the above conditions (lower diagram), and the resulting torque (upper diagram).

Note that the space vector modulation as described with respect to Fig. 4 with orthogonal space vectors facilitates the equalization of the partial DC-link voltages for $I_a = 0$, because the usage of $v_7$ and $v_8$ directly lead to an equal loading of the upper and the lower DC-link capacitor 16, 18 from the load side. Especially for higher modulation indices (in the range of 0.2 to 0.5), this type of space vector modulation may become increasingly attractive.

Based on the above, the reference currents may be found by selecting one of the following six options, which leads to the maximum torque for a certain angle $\theta(t)$:

I.

$$I_{a,w} = 0, I_{b,w} = \hat{I}_{S,w}, I_{c,w} = -\hat{I}_{S,w}$$

II.

$$I_{a,w} = 0, I_{b,w} = -\hat{I}_{S,w}, I_{c,w} = \hat{I}_{S,w}$$

III.

$$I_{a,w} = \hat{I}_{S,w}, I_{b,w} = 0, I_{c,w} = -\hat{I}_{S,w}$$

IV.

$$I_{a,w} = -\hat{I}_{S,w}, I_{b,w} = 0, I_{c,w} = \hat{I}_{S,w}$$

V.

$$I_{a,w} = \hat{I}_{S,w}, I_{b,w} = -\hat{I}_{S,w}, I_{c,w} = 0$$

VI.

$$I_{a,w} = -\hat{I}_{S,w}, I_{b,w} = \hat{I}_{S,w}, I_{c,w} = 0$$

In case the ripple of the partial DC-link voltages is larger than maximally specified, each option can be relaxed by allowing a certain current component for the phase with initially zero current. It is noted that the inequality conditions (i.e., the second set of conditions) for the reference current still need to be fulfilled. Option 6 for example can be modified to $I_{a,w}$ = -0.7 · $\hat{I}_{S,w}$, $I_{b,w}$ = $\hat{I}_{S,w}$, $I_{c,w}$ = -0.3 · $\hat{I}_{S,w}$.

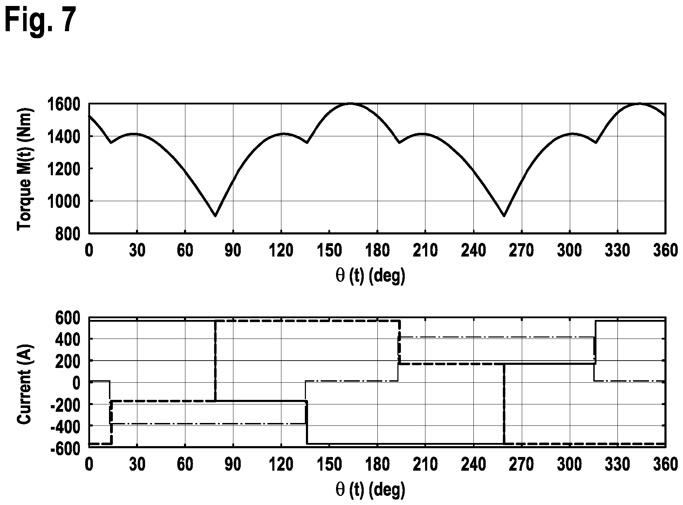

Fig. 7 shows a diagram with torque and reference currents over time relating to the following example. The option sequence from $\theta(t)$ = 0 to $\theta(t)$ = 360 deg is given by:

Option 1 → Option 6 → Option 4 → Option 2 → Option 5 → Option 3 (→ Option 1)

The angles, at which the option is modified, can be calculated on-line or off-line and stored in a look up table.

All the options provided so far are provided for motor driving, i.e., in a driving mode. In the same manner as just described, a sequence of options for braking conditions, i.e., for a braking mode, can be found.

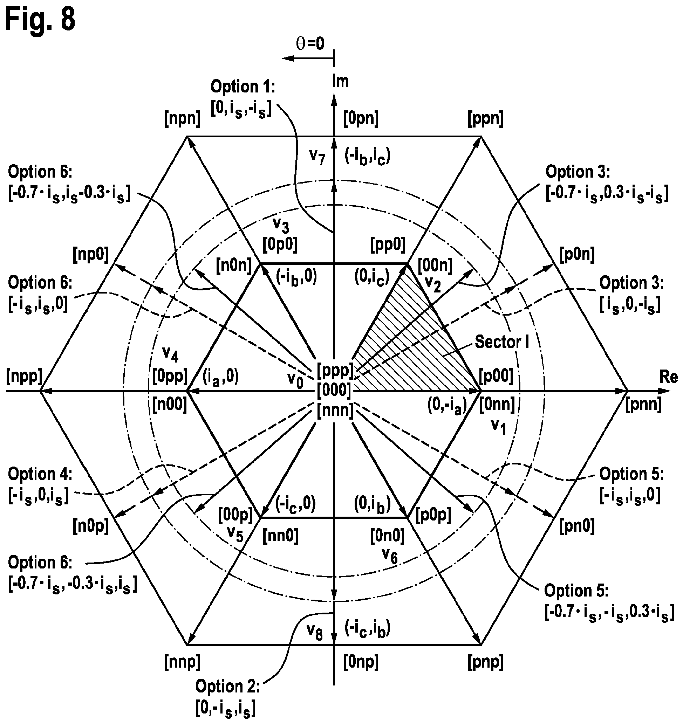

Fig. 8 shows a corresponding diagram for the resulting space vectors of the reference currents, which are produced as given in Fig. 6 and Fig. 7. In this embodiment, the space vector modulation according to Fig. 3 or Fig. 4 can be chosen.

The average torque and minimum torque for the max. envelope shown in Fig. 7 for the proposed approach are 1.35 kNm and 900 Nm, respectively, for a maximum torque of 1.6 kNm. For an approach, where the torque reference is drastically reduced to a minimum value of 320 Nm in at least the two 60deg interval described above, an average torque of 3/5·1.6 kNm + 2/5·320 Nm = 1.1 kNm is obtained in the best case.

It is noted that in the two 60 deg intervals mentioned above, no DC-link voltage equalization is possible. However, already before entering and/or after leaving these two intervals, the unequal loading of the DC-link capacitors 16, 18 from the load side may be so high that the requested torque already needs to be lowered before entering the two intervals and/or needs to be kept at this lowered value after exiting the two intervals. Accordingly, the distribution between 1.6 kNm and 320 Nm is 3/5 and 2/5 (and not 2/3 and 1/3).

The six different options can now be written in a more general form as given at the example of Sector I:

$$I_{a,w} = y(t) \cdot \hat{I}_{S,w} - \frac{y(t) + x(t) + \tilde{x}(t)}{3} \cdot \hat{I}_{S,w} \approx \frac{2 \cdot y(t)}{3} \cdot \hat{I}_{S,w}$$

$$I_{b,w} = x(t) \cdot \hat{I}_{S,w} - \frac{y(t) + x(t) + \tilde{x}(t)}{3} \cdot \hat{I}_{S,w} \approx x(t) \cdot \hat{I}_{S,w}$$

$$I_{c,w} = \tilde{x}(t) \cdot \hat{I}_{S,w} - \frac{y(t) + x(t) + \tilde{x}(t)}{3} \cdot \hat{I}_{S,w} \approx -x(t) \cdot \hat{I}_{S,w}$$

where $|y(t)|$ « $|x(t)|$ and $\tilde{x}(t) \approx -x(t)$ for $x(t) \geq 0$ and $y(t) \leq 0$ can be assumed (for driving). $y(t)$ = 0 and $\tilde{x}(t)$ = -$x(t)$ lead for instance directly to option 1. Option 2 is obtained for Sector II and Sector III, where $x(t) \leq 0$.

In summary, this all results in (for driving)

$$\circ \quad \begin{cases} I_{a,w} = 0 \\ I_{b,w} = \hat{I}_{S,w} \\ I_{c,w} = -\hat{I}_{S,w} \end{cases} \rightarrow \begin{cases} I_{a,w} \approx \frac{2 \cdot y(t)}{3} \cdot \hat{I}_{S,w} \\ I_{b,w} \approx x(t) \cdot \hat{I}_{S,w} \\ I_{c,w} \approx -x(t) \cdot \hat{I}_{S,w} \end{cases} \text{ with } x(t) \geq 0 \text{ and } y(t) \leq 0,$$

$$\circ \begin{cases} I_{a,w} = 0 \\ I_{b,w} = -\hat{I}_{S,w} \\ I_{c,w} = \hat{I}_{S,w} \end{cases} \Rightarrow \begin{cases} I_{a,w} \approx \frac{2 \cdot y(t)}{3} \cdot \hat{I}_{S,w} \\ I_{b,w} \approx x(t) \cdot \hat{I}_{S,w} \\ I_{c,w} \approx -x(t) \cdot \hat{I}_{S,w} \end{cases} \text{ with } x(t) \leq 0 \text{ and } y(t) \leq 0,$$

$$\circ \begin{cases} I_{a,w} = -\hat{I}_{S,w} \\ I_{b,w} = 0 \\ I_{c,w} = \hat{I}_{S,w} \end{cases} \Rightarrow \begin{cases} I_{a,w} \approx -x(t) \cdot \hat{I}_{S,w} \\ I_{b,w} \approx \frac{2 \cdot y(t)}{3} \cdot \hat{I}_{S,w} \\ I_{c,w} \approx x(t) \cdot \hat{I}_{S,w} \end{cases} \text{ with } x(t) \geq 0 \text{ and } y(t) \leq 0,$$

$$\circ \begin{cases} I_{a,w} = \hat{I}_{S,w} \\ I_{b,w} = 0 \\ I_{c,w} = -\hat{I}_{S,w} \end{cases} \Rightarrow \begin{cases} I_{a,w} \approx -x(t) \cdot \hat{I}_{S,w} \\ I_{b,w} \approx \frac{2 \cdot y(t)}{3} \cdot \hat{I}_{S,w} \\ I_{c,w} \approx x(t) \cdot \hat{I}_{S,w} \end{cases} \text{ with } x(t) \leq 0 \text{ and } y(t) \geq 0,$$

$$\circ \begin{cases} I_{a,w} = \hat{I}_{S,w} \\ I_{b,w} = -\hat{I}_{S,w} \\ I_{c,w} = 0 \end{cases} \Rightarrow \begin{cases} I_{a,w} \approx x(t) \cdot \hat{I}_{S,w} \\ I_{b,w} \approx -x(t) \cdot \hat{I}_{S,w} \\ I_{c,w} \approx \frac{2 \cdot y(t)}{3} \cdot \hat{I}_{S,w} \end{cases} \text{ with } x(t) \geq 0 \text{ and } y(t) \geq 0,$$

$$\circ \begin{cases} I_{a,w} = -\hat{I}_{S,w} \\ I_{b,w} = \hat{I}_{S,w} \\ I_{c,w} = 0 \end{cases} \Rightarrow \begin{cases} I_{a,w} \approx x(t) \cdot \hat{I}_{S,w} \\ I_{b,w} \approx -x(t) \cdot \hat{I}_{S,w} \\ I_{c,w} \approx \frac{2 \cdot y(t)}{3} \cdot \hat{I}_{S,w} \end{cases} \text{ with } x(t) \leq 0 \text{ and } y(t) \leq 0.$$

In conclusion, considering not only the driving mode but also the braking mode, $x(t)$, $\tilde{x}(t)$ and $y(t)$ are in the range

$$x(t) \in [-1, 1], \tilde{x}(t) = k_x \cdot x(t) \text{ and } y \in \left[-k_y, k_y\right]$$

with

$$-1 \leq k_x \leq 0 \ \wedge k_x \approx -1 \text{ and } k_y \geq 0 \ \wedge k_y \ll 1.$$

The components of the reference currents hence show a stepwise constant waveform. The actual current components, however, cannot instantaneously follow their references. After a set-point change, current transients occur until the current components are settling to their new reference values. The settling time is among others dependent on the motor parameters. For low motor speeds (e.g., < 50 Hz electric), the time-periods of these transient intervals are short compared to one fundamental period. Thus, the current components are settled to their new reference values before a new set-point change occur. However, with increasing motor speed (e.g., higher than 50 Hz electric), a set-point change occurs while the current components are still settling. Accordingly, the current components start to deviate more and more from the reference values due to the progressively quick recurring of transient intervals.

In this case, the following shaping of the reference currents may deliver a better performance with respect to the defined goals. The above findings are applied to the amplitude and not the time value of the current components of reference currents, such as normal mode reference currents. The following values of $x(t)$, $\tilde{x}(t)$ and $y(t)$ may be employed for option 1 and option 2:

$$x(t) = x_1 \cdot \sin(\theta(t) + \varphi_{x1})$$

$$\tilde{x}(t) = -\tilde{x}_1 \cdot \sin(\theta(t) + \varphi_{x1})$$

$$y(t) = y_1 \cdot \cos\big(\theta(t) + \varphi_{y1}\big)$$

where $|y_1| \ll |x_1|$ and $\tilde{x}_1 \approx -x_1$. In the same manner, the waveform of the components of the reference current can be derived for options 3 to 6.

To broaden the covered reference current waveforms, $k_y \leq 1$ can be set. It is enough to set the upper bound for $k_y$ to 1, because in this case, the reference current waveforms calculated for two different options are identical. An example for this is

$$\begin{cases} I_{a,w} \approx y(t) \cdot \hat{I}_{S,w} - \frac{y(t)+x(t)+\tilde{x}(t)}{3} \cdot \hat{I}_{S,w} \\ I_{b,w} \approx x(t) \cdot \hat{I}_{S,w} - \frac{y(t)+x(t)+\tilde{x}(t)}{3} \cdot \hat{I}_{S,w} \\ I_{c,w} \approx \tilde{x}(t) \cdot \hat{I}_{S,w} - \frac{y(t)+x(t)+\tilde{x}(t)}{3} \cdot \hat{I}_{S,w} \end{cases} \xrightarrow{x=1,\tilde{x}=-1,y=-1} \begin{cases} I_{a,w} = -\beta \cdot \frac{\hat{I}_{S,w}}{2} \\ I_{b,w} = \beta \cdot \hat{I}_{S,w} \text{ with } \beta = \frac{4}{3} \\ I_{c,w} = -\beta \cdot \frac{\hat{I}_{S,w}}{2} \end{cases}$$

$$\begin{cases} I_{a,w} \approx x(t) \cdot \hat{I}_{S,w} - \frac{y(t)+x(t)+\tilde{x}(t)}{3} \cdot \hat{I}_{S,w} \\ I_{b,w} \approx \tilde{x}(t) \cdot \hat{I}_{S,w} - \frac{y(t)+x(t)+\tilde{x}(t)}{3} \cdot \hat{I}_{S,w} \\ I_{c,w} \approx y(t) \cdot \hat{I}_{S,w} - \frac{y(t)+x(t)+\tilde{x}(t)}{3} \cdot \hat{I}_{S,w} \end{cases} \xrightarrow{x=-1,\tilde{x}=1,y=-1} \begin{cases} I_{a,w} = -\beta \cdot \frac{\hat{I}_{S,w}}{2} \\ I_{b,w} = \beta \cdot \hat{I}_{S,w} \text{ with } \beta = \frac{4}{3} \\ I_{c,w} = -\beta \cdot \frac{\hat{I}_{S,w}}{2} \end{cases}$$

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for controlling an electrical converter (10),

   wherein the electrical converter (10) is configured for converting a DC voltage from a split DC-link (16, 18) into a three-phase output voltage to be supplied to three output phases (*a, b, c*), wherein for each output phase, the electrical converter (10) has a changeover switch (20, 22, 24) configured for generating three voltage levels; the method comprising:

      detecting a failure in the electrical converter (10), which causes the electrical converter (10) to solely generate a neutral output level in one failed output phase;
      in the case, no failure is detected: determining the voltage reference (43) from normal mode reference currents (41);
      in the case, the failure is detected: determining the voltage reference (53) from degraded mode reference currents (51);
      switching the electrical converter (10) to generate the voltage reference in the output phases;

   wherein the degraded mode reference currents (51) with components $I_{a,w}$, $I_{b,w}$, and $I_{c,w}$ for the three output phases *a, b, c* are determined by

$$\begin{cases} I_{P(i,1),\mathrm{w}}(\theta) = y(\theta) \cdot \hat{I}_{\mathrm{S,w}} - \dfrac{y(\theta) + x(\theta) + \tilde{x}(\theta)}{3} \cdot \hat{I}_{\mathrm{S,w}} \\[2mm] I_{P(i,2),\mathrm{w}}(\theta) = x(\theta) \cdot \hat{I}_{\mathrm{S,w}} - \dfrac{y(\theta) + x(\theta) + \tilde{x}(\theta)}{3} \cdot \hat{I}_{\mathrm{S,w}} \\[2mm] I_{P(i,3),\mathrm{w}}(\theta) = \tilde{x}(\theta) \cdot \hat{I}_{\mathrm{S,w}} - \dfrac{y(\theta) + x(\theta) + \tilde{x}(\theta)}{3} \cdot \hat{I}_{\mathrm{S,w}} \end{cases}$$

wherein $P = \begin{bmatrix} a & b & c \\ b & c & a \\ c & a & b \end{bmatrix}$ is a permutation matrix of the three phases and $i = 1.. 3$,

wherein $\hat{I}_{\mathrm{S,w}}$ is a reference current and a fundamental period of the degraded mode reference current (51) is parametrized by angle $\theta$;
wherein $x(\theta)$ is chosen from $\{x_n(\theta), x_p(\theta)\}$ with $-1 \le x_n(\theta) \le 0$, $0 \le x_p(\theta) \le 1$ , and
wherein $\tilde{x}(\theta)$ and $y(\theta)$ are chosen in dependence of $x(\theta)$ by

$$\tilde{x}(\theta) = k_x(\theta) \cdot x(\theta) \text{ with } -1 \le k_x(\theta) \le 0,$$

$$y(\theta) \in \left[ -k_y(\theta), k_y(\theta) \right] \text{ with } 0 \le k_y(\theta) \le 1.$$

2. The method of claim 1,

wherein the degraded mode reference currents (51) are determined as a repeating sequence of six or less options over one fundamental period;
wherein the six or less options are given by $x(\theta) = x_n(\theta)$ for $i = 1.. 3$ and $x(\theta) = x_p(\theta)$ for $i = 1.. 3$.

3. The method of claim 2,
wherein angles $\theta_j$ at which an actual option changes to a next option are determined based on a resulting torque of an electrical motor supplied by the electrical converter.

4. The method according to one of the previous claims,
wherein the degraded mode reference currents (51) are determined depending on normal mode reference currents (41), which normal mode reference currents are determined under the condition that all three changeover switches (20, 22, 24) of the electrical converter (10) would be freely switchable.

5. The method according to one of the previous claims, wherein

$$x(\theta) = x_1(\theta) \cdot \sin\left(\theta + \varphi_{x1}\right),$$

$$\tilde{x}(\theta) = -\tilde{x}_1(\theta) \cdot \sin\left(\theta + \varphi_{x1}\right),$$

$$y(\theta) = y_1(\theta) \cdot \cos\left(\theta + \varphi_{y1}\right),$$

$$x_1(\theta) \in \left\{x_{n,1}(\theta), x_{p,1}(\theta)\right\} \text{ with } -1 \le x_{n,1}(\theta) \le 0 \text{ and } 0 \le x_{p,1}(\theta) \le 1,$$

$$\tilde{x}_1(\theta) = k_{x,1}(\theta) \cdot x_1(\theta) \text{ with } -1 \le k_{x,1}(\theta) \le 0,$$

$$y_1(\theta) \in \left[ -k_{y,1}(\theta), k_{y,1}(\theta) \right] \text{ with } 0 \le k_{y,1}(\theta) \le 1.$$

6. The method according to one of the previous claims,

wherein the parameters $x_n(\theta)$, $x_p(\theta)$, $k_x(\theta)$, $k_y(\theta)$ are chosen, such that a resulting torque of a motor (15) supplied by the electrical converter (10) is maximized; and/or

wherein the parameters are chosen, such that in at least a range of $\theta$, a first component of the degraded mode reference current ($I_{a,w}$) is at least 10 times smaller than the other two components of the degraded mode reference currents;

wherein the parameters are chosen, such that in at least a range of $\theta$, a second degraded mode reference current ($I_{b,w}$) has the same absolute value but opposite sign as a third degraded mode reference current ($I_{c,w}$).

7. The method of one of the previous claims,
wherein switching commands (45) for the electrical converter (10) are determined from the voltage reference (53) via space vector modulation.

8. The method of one of claims 1 to 6,

wherein switching commands (45) for the electrical converter (10) are determined from the voltage reference (53) via reduced space vector modulation;
wherein in reduced space vector modulation, solely space vectors are used, which only comprise a neutral level of a degraded phase, for which the changeover switch (20, 22, 24) is solely generating a neutral voltage level.

9. The method of claim 8,
wherein orthogonal space vectors and the zero space vector are used for generating an output voltage vector, where the orthogonal space vectors and the zero space vector sum up to the output voltage space vector.

10. The method of one of claims 7 to 9,
wherein, the converter is switched between complementary space vectors, when a zero space vector should be applied to the converter.

11. The method of one of the previous claims, further comprising:
wherein the voltage reference (53) is determined from the degraded mode reference currents (51), when a reference frequency for the electrical converter (10) is smaller than a frequency threshold.

12. A controller for controlling an electrical converter adapted for performing the method of one of claims 1 to 11.

13. An electrical converter system (8), comprising:

an electrical converter (10) configured for converting a DC voltage from a split DC-link (16, 18) into a three-phase output voltage to be supplied to three output phases (*a, b, c*) wherein for each output phase, the electrical converter (10) has a changeover switch (20, 22, 24) configured for generating three voltage levels;
a controller (30) according to claim 12.

14. A computer program for controlling an electrical converter (10)comprising instructions to cause the electrical converter system of claim 13 to perform the method of one of claims 1 to 11.

15. A computer-readable medium, in which a computer program according to claim 14 is stored.


**Patentansprüche**

1. Verfahren zum Steuern eines elektrischen Umrichters (10),

wobei der elektrische Umrichter (10) zum Umwandeln einer DC-Spannung von einem geteilten Zwischenkreis (16, 18) in eine Dreiphasen-Ausgangsspannung, die an drei Ausgangsphasen (a, b, c) geliefert werden soll, konfiguriert ist, wobei für jede Ausgangsphase der elektrische Umrichter (10) einen Umschalter (20, 22, 24) aufweist, der zum Erzeugen von drei Spannungspegeln konfiguriert ist;
wobei das Verfahren Folgendes umfasst:

Detektieren eines Fehlers im elektrischen Umrichter (10), der bewirkt, dass der elektrische Umrichter (10) ausschließlich einen neutralen Ausgangspegel in einer fehlgeschlagenen Ausgangsphase erzeugt;

falls kein Fehler detektiert wird: Bestimmen der Spannungsreferenz (43) aus Referenzströmen (41) im Normalmodus;

falls der Fehler detektiert wird: Bestimmen der Spannungsreferenz (53) aus Referenzströmen (51) im degradierten Modus;

Schalten des elektrischen Umrichters (10), um die Spannungsreferenz in den Ausgangsphasen zu erzeugen;

wobei die Referenzströme (51) im degradierten Modus mit Komponenten $I_{a,w}$, $I_{b,w}$ und $I_{c,w}$ für die drei Ausgangsphasen a, b, c bestimmt werden, durch

$$
\begin{cases}
I_{P(i,1),w}(\theta) = y(\theta) \cdot \hat{I}_{S,w} \ - \dfrac{y(\theta) + x(\theta) + \tilde{x}(\theta)}{3} \cdot \hat{I}_{S,w} \\[2ex]
I_{P(i,2),w}(\theta) = x(\theta) \cdot \hat{I}_{S,w} \ - \dfrac{y(\theta) + x(\theta) + \tilde{x}(\theta)}{3} \cdot \hat{I}_{S,w} \\[2ex]
I_{P(i,3),w}(\theta) = \tilde{x}(\theta) \cdot \hat{I}_{S,w} \ - \dfrac{y(\theta) + x(\theta) + \tilde{x}(\theta)}{3} \cdot \hat{I}_{S,w}
\end{cases}
$$

wobei $P = \begin{bmatrix} a & b & c \\ b & c & a \\ c & a & b \end{bmatrix}$ eine Permutationsmatrix der drei Phasen ist und i = 1.. 3,

wobei $\hat{I}_{S,w}$ ein Referenzstrom ist und eine Grundperiode des Referenzstroms (51) des degradierten Modus durch Winkel θ parametrisiert wird;

wobei x(θ) aus $\{x_n(\theta), x_p(\theta)\}$ mit $-1 \le x_n(\theta) \le 0, 0 \le x_p(\theta) \le 1$ ausgewählt wird, und

wobei x(θ) und y(θ) in Abhängigkeit von x̃(θ ausgewählt werden, durch

$$\tilde{x}(\theta) \ = \ k_x(\theta) \ \cdot \ x(\theta) \ \text{mit} \ -1 \ \le \ k_x(\theta) \ \le \ 0,$$

$$y(\theta) \ \in \ [-k_y(\theta), \ k_y(\theta)] \ \text{mit} \ 0 \ \le \ k_y(\theta) \ \le \ 1.$$

2. Verfahren nach Anspruch 1,

wobei die Referenzströme (51) im degradierten Modus als eine sich wiederholende Sequenz von sechs oder weniger Optionen über eine Grundperiode bestimmt werden;

wobei die sechs oder weniger Optionen gegeben sind durch x(θ) = $x_n(\theta)$ für i = 1.. 3 und x(θ) = $x_p(\theta)$ für i = 1.. 3.

3. Verfahren nach Anspruch 2,

wobei Winkel $\theta_j$, an denen sich eine tatsächliche Option zu einer nächsten Option ändert, basierend auf einem resultierenden Drehmoment eines Elektromotors bestimmt werden, der vom elektrischen Umrichter versorgt wird.

4. Verfahren nach einem der vorherigen Ansprüche,

wobei die Referenzströme (51) im degradierten Modus in Abhängigkeit von Referenzströmen (41) im Normalmodus bestimmt werden, wobei die Referenzströme im Normalmodus unter der Bedingung bestimmt werden, dass alle drei Umschalter (20, 22, 24) des elektrischen Umrichters (10) frei schaltbar wären.

5. Verfahren nach einem der vorherigen Ansprüche, wobei

$$x(\theta) \ = \ x_1(\theta) \ \cdot \ \sin(\theta \ + \ \varphi_{x1}),$$

$$\tilde{x}(\theta) \ = \ - \ \tilde{x}(\theta) \ \cdot \ \sin(\theta \ + \ \varphi_{x1}),$$

$$y(\theta) \ = \ y_1(\theta) \ \cdot \ \cos(\theta \ + \ \varphi_{Y1}),$$

$$x_1(\theta) \in \{x_{n,1}(\theta), x_{p,1}(\theta)\} \text{ mit } -1 \le x_{n,1}(\theta) \le 0 \text{ und } 0 \le x_{p,1}(\theta) \le 1,$$

$$\tilde{x}(\theta) = k_{x,1}(\theta) x_1(\theta) \text{ mit } -1 \le k_{x,1}(\theta) \le 0,$$

$$y_1(\theta) \in [-k_{y,1}(\theta), k_{y,1}(\theta)] \text{ mit } 0 \le k_{y,1}(\theta) \le 1.$$

6. Verfahren nach einem der vorherigen Ansprüche, wobei die Parameter $x_n(\theta)$, $x_p(\theta)$, $k_x(\theta)$, $k_y(\theta)$ so ausgewählt werden, dass ein resultierendes Drehmoment eines Motors (15), der vom elektrischen Umrichter (10) versorgt wird, maximiert wird; und/oder

wobei die Parameter so ausgewählt werden, dass in zumindest einem Bereich von $\theta$ eine erste Komponente des Referenzstroms ($I_{a,w}$) im degradierten Modus mindestens 10 mal kleiner ist als die anderen beiden Komponenten der Referenzströme im degradierten Modus;
wobei die Parameter so ausgewählt werden, dass in zumindest einem Bereich von $\theta$ ein zweiter Referenzstrom ($I_{b,w}$) im degradierten Modus den gleichen absoluten Wert, aber ein entgegengesetztes Vorzeichen wie ein dritter Referenzstrom ($I_{c,w}$) im degradierten Modus aufweist.

7. Verfahren nach einem der vorherigen Ansprüche, wobei Schaltbefehle (45) für den elektrischen Umrichter (10) aus der Spannungsreferenz (53) mittels Raumvektormodulation bestimmt werden.

8. Verfahren nach einem der Ansprüche 1 bis 6,

wobei Schaltbefehle (45) für den elektrischen Umrichter (10) aus der Spannungsreferenz (53) mittels reduzierter Raumvektormodulation bestimmt werden;
wobei bei der reduzierten Raumvektormodulation ausschließlich Raumvektoren verwendet werden, die nur einen neutralen Pegel einer degradierten Phase umfassen, für die der Umschalter (20, 22, 24) ausschließlich einen neutralen Spannungspegel erzeugt.

9. Verfahren nach Anspruch 8,
wobei orthogonale Raumvektoren und der Nullraumvektor zum Erzeugen eines Ausgangsspannungsvektors verwendet werden, wobei sich die orthogonalen Raumvektoren und der Nullraumvektor zu dem Ausgangsspannungsraumvektor summieren.

10. Verfahren nach einem der Ansprüche 7 bis 9,
wobei der Umrichter zwischen komplementären Raumvektoren geschaltet wird, wenn ein Nullraumvektor auf den Umrichter angewendet werden sollte.

11. Verfahren nach einem der vorherigen Ansprüche, ferner umfassend:
wobei die Spannungsreferenz (53) aus den Referenzströmen (51) im degradierten Modus bestimmt wird, wenn eine Referenzfrequenz für den elektrischen Umrichter (10) kleiner als eine Frequenzschwelle ist.

12. Steuerung zum Steuern eines elektrischen Umrichters, die zum Durchführen des Verfahrens nach einem der Ansprüche 1 bis 11 eingerichtet ist.

13. Elektrisches Umrichtersystem (8), umfassend:

einen elektrischen Umrichter (10), der zum Umwandeln einer DC-Spannung von einem geteilten Zwischenkreis (16, 18) in eine Dreiphasen-Ausgangsspannung, die an drei Ausgangsphasen (a, b, c) geliefert werden soll, konfiguriert ist, wobei für jede Ausgangsphase der elektrische Umrichter (10) einen Umschalter (20, 22, 24) aufweist, der zum Erzeugen von drei Spannungspegeln konfiguriert ist;
eine Steuerung (30) nach Anspruch 12.

14. Computerprogramm zum Steuern eines elektrischen Umrichters (10), umfassend Anweisungen zum Veranlassen, dass das elektrische Umrichtersystem nach Anspruch 13 das Verfahren nach einem der Ansprüche 1 bis 11 durchführt.

**15.** Computerlesbares Medium, in dem ein Computerprogramm nach Anspruch 14 gespeichert ist.

**Revendications**

**1.** Procédé de commande d'un convertisseur électrique (10),

dans lequel le convertisseur électrique (10) est conçu pour convertir une tension continue à partir d'une liaison continue divisée (16, 18) en une tension de sortie triphasée destinée à alimenter trois phases de sortie (a, b, c), dans lequel pour chaque phase de sortie, le convertisseur électrique (10) a un inverseur (20, 22, 24) conçu pour générer trois niveaux de tension ;
le procédé comprenant les étapes consistant à :

détecter une défaillance dans le convertisseur électrique (10), qui amène le convertisseur électrique (10) à générer seulement un niveau de sortie neutre dans une phase de sortie défaillante ;
dans le cas où aucune défaillance n'est détectée :

déterminer la référence de tension (43) à partir de courants de référence en mode normal (41) ;
dans le cas où la défaillance est détectée : déterminer la référence de tension (53) à partir de courants de référence en mode dégradé (51) ;
commuter le convertisseur électrique (10) pour générer la référence de tension dans les phases de sortie ;
dans lequel les courants de référence en mode dégradé (51) avec des composants $I_{a,w}$, $I_{b,w}$, et $I_{c,w}$ pour les trois phases de sortie a, b, c sont déterminés par

$$\begin{cases} I_{P(i,1),w}(\theta) = y(\theta) \cdot \hat{I}_{S,w} - \dfrac{y(\theta) + x(\theta) + \tilde{x}(\theta)}{3} \cdot \hat{I}_{S,w} \\[2mm] I_{P(i,2),w}(\theta) = x(\theta) \cdot \hat{I}_{S,w} - \dfrac{y(\theta) + x(\theta) + \tilde{x}(\theta)}{3} \cdot \hat{I}_{S,w} \\[2mm] I_{P(i,3),w}(\theta) = \tilde{x}(\theta) \cdot \hat{I}_{S,w} - \dfrac{y(\theta) + x(\theta) + \tilde{x}(\theta)}{3} \cdot \hat{I}_{S,w} \end{cases}$$

dans lequel $P = \begin{bmatrix} a & b & c \\ b & c & a \\ c & a & b \end{bmatrix}$ est une matrice de permutation des trois phases et i = 1.. 3,

dans lequel $\hat{I}_{S,w}$ est un courant de référence et une période fondamentale du courant de référence en mode dégradé (51) est paramétrée par l'angle $\theta$ ;
dans lequel $x(\theta)$ est choisi à partir de $\{x_n(\theta), x_p(\theta)\}$ avec $-1 \leq x_n(\theta) \leq 0$, $0 \leq x_p(\theta) \leq 1$, et
dans lequel $\tilde{x}(\theta)$ et $y(\theta)$ sont choisis en fonction de $\tilde{x}(\theta)$ par

$$\tilde{x}(\theta) = k_x(\theta) \cdot x(\theta) \text{ avec } -1 \leq k_x(\theta) \leq 0,$$

$$y(\theta) \in [-k_y(\theta), k_y(\theta)] \text{ avec } 0 \leq k_y(\theta) \leq 1.$$

**2.** Procédé selon la revendication 1,

dans lequel les courants de référence en mode dégradé (51) sont déterminés comme une séquence répétitive de six options ou moins sur une période fondamentale ;
dans lequel les six options ou moins sont données par $x(\theta) = x_n(\theta)$ pour i = 1.. 3 et $x(\theta) = x_p(\theta)$ pour i = 1.. 3.

**3.** Procédé selon la revendication 2,
dans lequel les angles $\theta_j$ au niveau desquels une option réelle passe à une option suivante sont déterminés sur la base d'un couple résultant d'un moteur électrique alimenté par le convertisseur électrique.

4. Procédé selon l'une des revendications précédentes, dans lequel les courants de référence en mode dégradé (51) sont déterminés en fonction de courants de référence en mode normal (41), ces courants de référence en mode normal sont déterminés à condition que l'ensemble des trois inverseurs (20, 22, 24) du convertisseur électrique (10) puissent être commutés librement.

5. Procédé selon l'une des revendications précédentes, dans lequel

$$x(\theta) = x_1(\theta) \cdot \sin(\theta + \varphi_{x1}),$$

$$\tilde{x}(\theta) = - \tilde{x}(\theta) \cdot \sin(\theta + \varphi_{x1}),$$

$$y(\theta) = y_1(\theta) \cdot \cos(\theta + \varphi_{Y1}),$$

$$x_1(\theta) \in \{x_{n,1}(\theta), x_{p,1}(\theta)\} \text{ avec } -1 \leq x_{n,1}(\theta) \leq 0 \text{ et } 0 \leq x_{p,1}(\theta) \leq 1,$$

$$\tilde{x}(\theta) = k_{x,1}(\theta) x_1(\theta) \text{ avec } -1 \leq k_{x,1}(\theta) \leq 0,$$

$$y_1(\theta) \in [-k_{y,1}(\theta), k_{y,1}(\theta)] \text{ avec } 0 \leq k_{y,1}(\theta) \leq 1.$$

6. Procédé selon l'une des revendications précédentes, dans lequel les paramètres $x_n(\theta)$, $x_p(\theta)$, $k_x(\theta)$, $k_y(\theta)$ sont choisis, de sorte qu'un couple résultant d'un moteur (15) alimenté par le convertisseur électrique (10) est maximisé ; et/ou

dans lequel les paramètres sont choisis, de sorte que dans au moins une plage de $\theta$, un premier composant du courant de référence en mode dégradé ($I_{a,w}$) est au moins 10 fois inférieur aux deux autres composants des courants de référence en mode dégradé ;
dans lequel les paramètres sont choisis, de sorte que dans au moins une plage de $\theta$, un deuxième courant de référence en mode dégradé ($I_{b,w}$) a la même valeur absolue mais un signe opposé comme troisième courant de référence en mode dégradé ($I_{c,w}$).

7. Procédé selon l'une des revendications précédentes, dans lequel des commandes de commutation (45) pour le convertisseur électrique (10) sont déterminées à partir de la référence de tension (53) par l'intermédiaire d'une modulation vectorielle spatiale.

8. Procédé selon l'une des revendications 1 à 6,

dans lequel des commandes de commutation (45) pour le convertisseur électrique (10) sont déterminées à partir de la référence de tension (53) par l'intermédiaire d'une modulation vectorielle spatiale réduite ;
dans lequel dans la modulation vectorielle spatiale réduite, seulement des vecteurs spatiaux sont utilisés, qui comprennent seulement un niveau neutre d'une phase dégradée, pour laquelle l'inverseur (20, 22, 24) génère seulement un niveau de tension neutre.

9. Procédé selon la revendication 8,
dans lequel des vecteurs spatiaux orthogonaux et le vecteur spatial nul sont utilisés pour générer un vecteur de tension de sortie, où les vecteurs spatiaux orthogonaux et le vecteur spatial nul s'additionnent au vecteur spatial de tension de sortie.

10. Procédé selon l'une des revendications 7 à 9,
dans lequel le convertisseur est commuté entre des vecteurs spatiaux complémentaires lorsqu'un vecteur spatial nul devrait être appliqué au convertisseur.

11. Procédé selon l'une des revendications précédentes, comprenant en outre les étapes suivantes :

la référence de tension (53) étant déterminée à partir des courants de référence en mode dégradé (51), lorsqu'une fréquence de référence pour le convertisseur électrique (10) est inférieure à un seuil de fréquence.

12. Contrôleur pour commander un convertisseur électrique adapté pour réaliser le procédé selon l'une des revendications 1 à 11.

13. Système (8) de convertisseur électrique, comprenant :

un convertisseur électrique (10) conçu pour convertir une tension continue à partir d'une liaison continue divisée (16, 18) en une tension de sortie triphasée destinée à alimenter trois phases de sortie (a, b, c) dans lequel pour chaque phase de sortie, le convertisseur électrique (10) a un inverseur (20, 22, 24) conçu pour générer trois niveaux de tension ;
un contrôleur (30) selon la revendication 12.

14. Programme informatique pour commander un convertisseur électrique (10) comprenant des instructions pour amener le système de convertisseur électrique selon la revendication 13 à effectuer le procédé selon l'une des revendications 1 à 11.

15. Support lisible par ordinateur, sur lequel est stocké un programme informatique selon la revendication 14.

## Fig. 1

## Fig. 2

# Fig. 3

# Fig. 4

**Fig. 5**

**Fig. 6**

# Fig. 7

# Fig. 8

**EP 4 304 082 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018029303 A1
- EP 3709497 A1
- EP 2469692 A1
- EP 3729637 A1
- WO 2019137916 A1
- CN 114421794 A

**Non-patent literature cited in the description**

- **XU SHL-ZHOU et al.** An Improved Fault-Tolerant Control Strategy for High-Power ANPC Three-Level Inverter Under Short-Circuit Fault of Power Devices. *IEEE ACCESS*, vol. 7, 55443-55457
- Performance of a synchronous reluctance motor drive with a fault-tolerant three-level neutral point clamped inverter. **MATOS DIOGO B et al.** 2016 XXII INTERNATIONAL CONFERENCE ON ELECTRICAL MACHINES (ICEM). IEEE, 04 September 2016, 1152-1159